# EUROPEAN PATENT SPECIFICATION

(11) **EP 0 911 568 B1**
(45) Date of publication and mention of the grant of the patent: **25.09.2002**
(21) Application number: 98308670.3
(22) Date of filing: 23.10.1998
(51) Int. Cl.: F16L 55/165, F16L 55/16, B29C 63/36

(54) **A branch pipe lining assembly and a pipe lining method**
Vorrichtung zur Auskleidung eines Abzweigrohres und Verfahren zur Auskleidung eines Rohres
Dispositif de revêtement d'un tuyau de dérivation et procédé pour le revêtement d'un tuyau

(30) Priority: 24.10.1997 JP 29237997
(43) Date of publication of application: 28.04.1999
(73) Proprietor: SHONAN GOSEI - JUSHI SEISAKUSHO K.K., Hiratsuka-shi, Kanagawa-ken (JP); YOKOSHIMA & COMPANY, Yuki-gun, Ibaraki-ken (JP); Get Inc., Tsukuba-shi, Ibaraki-ken (JP); Oar Company, Tokorozawa-shi, Saitama-ken (JP)
(72) Inventor: Kamiyama, Takao, Hiratsuka-shi, Kanagawa-ken (JP); Yokoshima, Yasuhiro, Yuki-gun, Ibaraki-ken (JP); Endoh, Shigeru, Niihari-gun, Ibaraki-ken (JP); Aoki, Hiroyuki, Tokorozawa-shi, Saitama-ken (JP)
(74) Representative: Whalley, Kevin

(56) References cited:
- EP-A- 0 518 521
- EP-A- 0 620 102
- EP-A- 0 752 305

## Description

The present invention relates to a branch pipe lining assembly with which a branch pipe is internally lined, and also to a pipe lining method for lining a main pipe and a branch pipe branching off from the main pipe.

When an underground main pipe, such as a sewer pipe, becomes defective or too old to perform properly, the pipe is repaired and restored without digging the earth to expose the pipe and disassembling the sections of the pipe. This non-digging method of repairing an underground pipe has been known and practiced commonly in the field of civil engineering. Typically, the method is disclosed by United States Patent No. 4,581,247.

According to this publication, this method of pipe repair comprises inserting a sufficiently long tubular flexible liner bag into the pipe to be repaired by means of a pressurized fluid, such as air or water. The tubular liner bag is made of a flexible resin-absorbent material impregnated with a thermosetting liquid resin, and has the outer surface closely covered with an impermeable polymeric film.

More particularly, according to the publication, the tubular flexible liner bag is closed at one end and open at the other; the tubular flexible liner bag is first flattened; then, the open end of the tubular liner bag is made to gape wide and hooked (anchored) at an end of the defective or aged pipe in a manner such that the wide-opened end of the liner bag completely and fixedly covers and closes the pipe end; a portion of the liner bag in the vicinity of the pipe end is pushed into the pipe so as to create an annular pocket; then, a pressurized fluid is applied to the annular pocket of the tubular liner bag such that the fluid urges the tubular liner bag to enter the pipe. Since one end of the tubular liner bag is hooked at the end of the pipe, it remains there while the rest of the flexible liner bag is turned inside out or everted under fluid pressure as it proceeds deeper in the pipe.
(Hereinafter, this manner of insertion shall be called "everting".) When the entire length of the tubular liner bag is everted (i.e., turned inside out) into the pipe, the everted tubular liner bag is pressed against the inner wall of the pipe by the said pressurized fluid or by an inflatable pressure bag to be inflated inside the everted tubular liner bag, and the flexible tubular liner bag is hardened as the thermosetting liquid resin soaking through the thickness of the liner bag is heated, which is effected, for example, by heating the fluid filling the tubular liner bag by means of hot steam, etc. Thereafter, the closed end of the liner bag is cut off. It is thus possible to line the inside wall of the defective or old pipe with a rigid liner without digging the ground and disassembling the pipe sections.

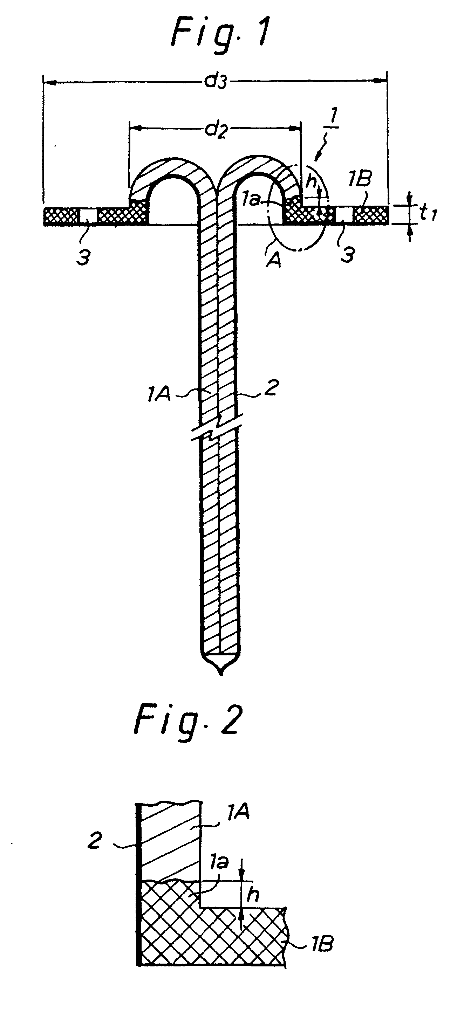

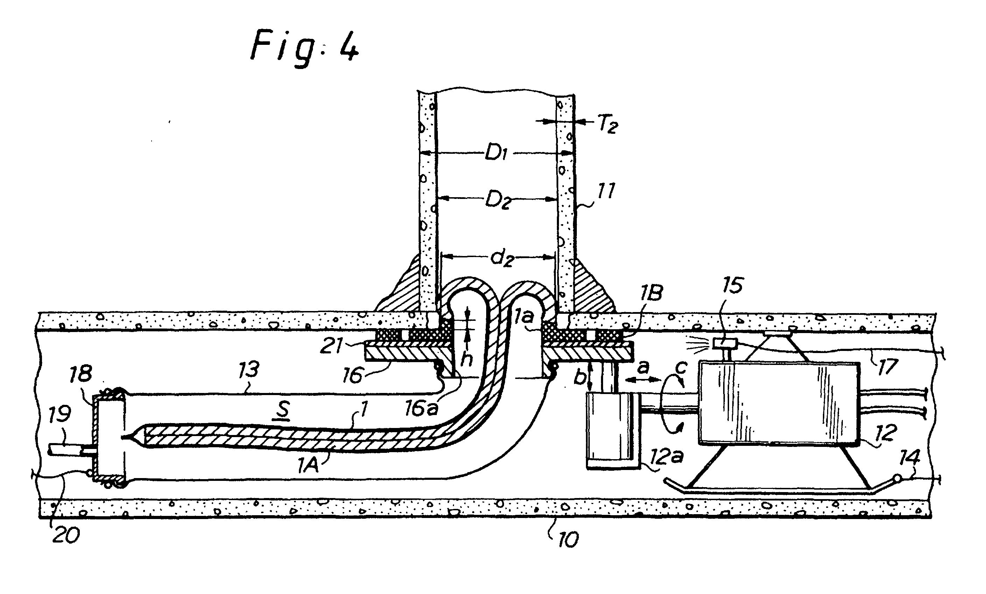

This pipe lining method is similarly applicable to a branch pipe which is in fluid communication with a main pipe such as a sewer pipe. Some of the present inventors formerly proposed in a patent application a branch pipe lining method wherein a branch pipe is internally lined with a branch pipe lining assembly having a collar-like flange at its open end to be hooked on the brim of the branch pipe opening (ref. Fig. 1 and Fig. 4).

More particularly, according to this prior art method, a collared branch pipe liner bag is first positioned in a main pipe (sewer pipe) and a collar of the branch pipe liner bag is fitted closely on the margin of the opening of the hole defined by a branch pipe; then, the branch pipe liner bag is everted into the branch pipe under fluid pressure so that the liner bag goes up toward the surface of the earth from the main pipe; and when the eversion is completed and the liner bag is closely pressed against the inner walls of the branch pipe, the hardenable liquid resin soaking through the branch pipe liner bag is hardened by heating or some other procedure depending on the nature of the liquid resin.

After the branch pipe is internally lined by this branch pipe lining method, the main pipe is lined with a main pipe liner by the conventional pipe lining method as described above. This main pipe liner closes the hole by which the branch pipe opens into the main pipe, and thus a hole is made through the main pipe liner to restore the fluid communication between the main pipe and the branch pipe.

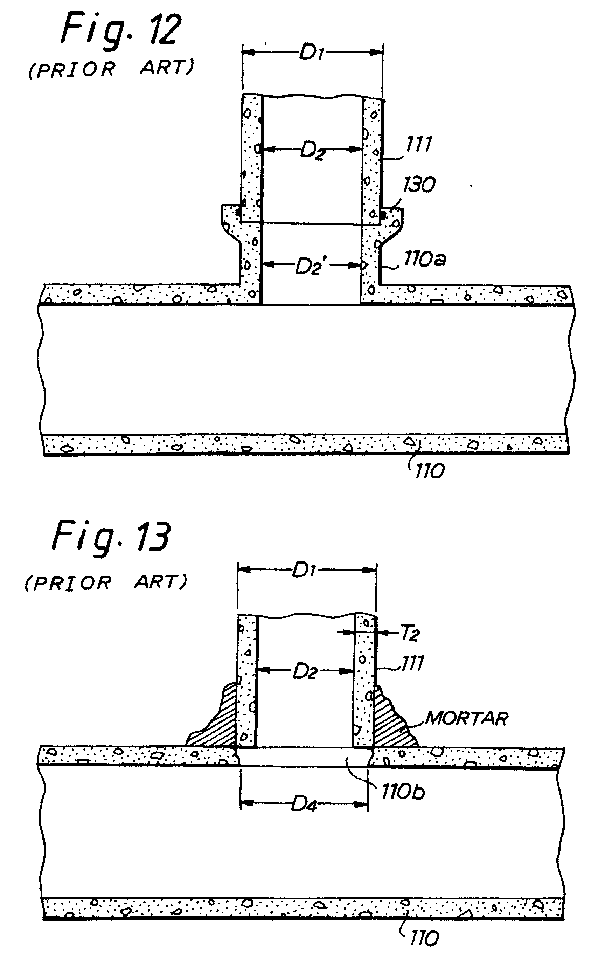

Now, generally there are two ways to join a branch pipe to a main pipe: a socket joining and a mortar joining, which are shown in Fig. 12 and Fig. 13 of the accompanying drawings, respectively. The socket joining is applicable when a main pipe 110 has socket(s) 110a formed integrally with it; the lower end of a branch pipe 111 is received in the socket 110a with a packing 130 interposed between the outer wall of the lower end of the branch pipe 111 and the inner wall of the socket 110a as shown in Fig. 12. The mortar joining method comprises making a hole 110b through the wall of the main pipe 110 with a hole saw, a chisel or a hammer, bringing the lower end of the branch pipe 111 to meet the hole 110b, and laying mortar at the joint where the branch pipe 111 and the hole 110b meet from outside the branch pipe 111 and main pipe 110 so as to permanently connect the two pipes 111 and 110 together.

In the existing sewer pipe networks, there are both those branch pipes which are socket-joined to the main pipes and those branch pipes which are mortared to the main pipes.

Now, in the case of the socket joining method as shown in Fig. 12, the inner diameter D₂' of a socket 110a is equal to the inner diameter D₂ of a branch pipe 111 (D₂' = D₂), so that when a collar of the branch pipe liner assembly, not shown, is pressed against the annular margin surrounding the branch pipe opening of the main pipe 110 by fluid pressure in lining the branch pipe 111, the collar is entirely stopped firmly by the inner wall of the main pipe 110. Therefore, it suffices if the outer diameter of the collar of the branch pipe liner assembly is greater than the inner diameter D₂ of the branch pipe 111, and also, since there is no need of taking into consideration the deformation of the collar, it is possible to design the thickness and the bending elasticity of the collar arbitrarily.

However, in the case of the mortar joining method, it is difficult to make such an opening in the wall of the main pipe 110 which has a diameter equal to the inner diameter D₂ of the branch pipe 111, and when a hole 110b made in the wall of the main pipe 110 has a diameter D₄ greater than the inner diameter of the branch pipe 111, the collar of the branch pipe liner would sink into the hole 110b of the main pipe 110 and even into the branch pipe 111 unless the outer diameter of the collar is substantially greater than the inner diameter D₂ of the branch pipe 111. Also, even if the outer diameter of the collar of the branch pipe liner assembly is sufficiently greater than the inner diameter D₂ of the branch pipe 111, if the hole made in the main pipe wall is larger than the inner diameter D₂ of the branch pipe 111 so that part of the collar is not firmly stopped by the inner wall of the main pipe 110 (such as the ring-like part having an inner diameter D₂ and a width equal to the thickness T₂ of the branch pipe 111 in an extreme case), the collar is deformed. In the branch pipe lining method, wherein a pressure bag is airtightly coupled to the branch pipe liner by being airtightly joined to one face of the collar, if the collar of the branch pipe liner assembly is deformed, the pressurized fluid is liable to leak out during the eversion and hardening of the branch pipe liner.

Hence, the thickness and the bending elasticity of the collar of the branch pipe liner assembly to be used to line a mortar-joined branch pipe ought to be such that the collar does not deform during the lining operation.

As a result, there have been at least two kinds of branch pipe lining assembly: one for mortar-joined branch pipes and another for socket-joined branch pipes. It was therefore necessary to select a suitable kind of branch pipe lining assembly depending on the kind of branch pipe to be repaired, and this gave rise to uneconomical stock piling.

The present invention was made in view of the above problems and others, and it is, therefore, an object of the invention to provide a branch pipe lining assembly which can be effectively used for both kinds of branch pipes - mortar-joined and socket-joined. Furthermore, it is also an object of the invention to provide a pipe lining method in which the branch pipe liner and a main pipe liner are used to line a branch pipe and a main pipe, respectively.

Attention is also drawn to the disclosure of EP-A-0518521.

The present invention provides a branch pipe lining assembly which has:
a liquid resin-absorbent, flexible tubular branch pipe liner;
a rigid annular collar formed at one end of the tubular branch pipe liner; and
an airtight polymeric film, with which the entire outer face of the tubular branch pipe liner is closely covered ;
wherein the rigid annular collar comprises a planar portion and a generally cylindrical protuberance extending from an inner periphery of the planar portion in a direction generally perpendicular to the planar portion and meeting at its end with the one end of the tubular branch pipe liner; the generally cylindrical protuberance has a height of 0.5 to 50 mm as measured from a closer side face of the planar portion; the outer diameter of the generally cylindrical protuberance is 0.1 to 50 mm smaller than the inner diameter of a branch pipe to be lined with the branch pipe lining assembly; the maximum distance between any two points which are on the outer edge of the planar portion and which are opposed to each other across the center of the collar is substantially greater than the outer diameter of the branch pipe; and the planar portion has a thickness of 1 mm or greater and a bending elasticity of 30 kg/mm² or greater; and characterized in that a plurality of penatrating holes aligned in a circular row are formed through the planar portion of the collar.

Preferably, the generally cylindrical protuberance is a solid cylinder in form.

It is sufficient, however, if the generally cylindrical protuberance is composed of a number of intermittent rises aligned in a circular row. In other words, the generally cylindrical protuberance can be composed of a circular range of intermittent rises.

It is preferred that the polymeric film extends to cover up that area where the generally cylindrical protuberance of the collar meets with the one end of the tubular branch pipe liner, to seal said pipe liner and said collar.

It is further preferred that a coating material is applied to that boundary area where the generally cylindrical protuberance of the collar meets with the one end of the tubular branch pipe liner, to seal said pipe liner and said collar.

The invention in another aspect provides a pipe lining method for lining a main pipe and a branch pipe branching off from the main pipe, comprising the steps of:
(a) preparing a branch pipe lining assembly according to the first aspect of the invention;
(b) attaching the collar to that portion of the inner wall of the main pipe which constitutes the margin of a branch pipe opening which forms an entrance to the branch pipe;
(c) everting the branch pipe liner under fluid pressure into the branch pipe from the main pipe;
(d) hardening the liquid resin soaking the branch pipe liner to thereby harden the branch pipe liner while the branch pipe liner is kept inflated;
(e) preparing a flexible main pipe lining assembly having:
   a liquid resin-absorbent, flexible tubular main pipe liner, and an airtight polymeric film, with which the entire outer face of the main pipe liner is closely covered ;
(f) everting the main pipe liner under fluid pressure into the main pipe;
(g) hardening the liquid resin soaking the main pipe liner to thereby harden the main pipe liner while the main pipe liner is kept inflated; and
(h) making a hole through that part of the main pipe liner which is closing the branch pipe opening.

It is preferable that, as of the time of the step (g), the sum of the thickness of the planar portion of the collar and the thickness of that part of the main pipe liner which overlaps the planar portion of the collar is greater than the thickness of the other parts of the main pipe liner.

According to the invention, therefore, the branch pipe lining assembly is designed such that the rigid annular collar has a generally cylindrical protuberance, which has a height of 0.5 to 50 mm and an outer diameter of a measure 0.1 to 50 mm smaller than the inner diameter of the branch pipe, so that in the case of lining a socket-joined branch pipe, it now becomes easy to position and set the collar at the branch pipe opening through the use of the generally cylindrical protuberance as a guide, and thus it is possible to fix the collar closely on that part of the inner wall of the main pipe which constitutes the margin surrounding the branch pipe opening; and once the collar protuberance is inserted in the branch pipe opening, the collar does not move even when it is pressed by fluid pressure, and moreover since the entire planar body of the collar is backed by the inner wall of the main pipe, the collar is prevented from deforming, nor does the compressed fluid leak at the collar during the eversion or hardening of the resin-absorbent member of the branch pipe lining assembly; consequently, the lining of the socket-joined branch pipe with the branch pipe lining assembly of the invention can be performed flawlessly.

Also, according to the invention, the collar of the branch pipe lining assembly is designed such that the maximum distance between any two points which are on the outer edge of the planar portion and which are opposed to each other across the center of the collar is substantially greater than the outer diameter of the branch pipe, and that the collar has a thickness of 1 mm or greater and a bending elasticity of 30 kg/mm² or greater, so that in the case of lining a mortar-joined branch pipe, even if a certain portion of the collar fails to be supported by the inner wall of the main pipe as the collar is pressed by the fluid pressure against that part of the inner wall of the main pipe which constitutes the margin surrounding the branch pipe opening, the collar does not deform by virtue of its high bending elasticity and thus the compressed fluid does not leak at the collar during the eversion and hardening of the branch pipe lining assembly, and consequently, the lining of the mortar-joined branch pipe with the branch pipe lining assembly can be effected flawlessly.

As explained above, the branch pipe lining assembly of the present invention satisfies at once (1) the requirements ascribable to the lining of socket-joined branch pipes(namely, the collar includes the generally cylindrical protuberance, which has a height of 0.5 - 50 mm, and an outer diameter which is 0.5 mm - 50 mm smaller than the inner diameter of the branch pipe) and (2) the requirements ascribable to the lining of mortar-joined branch pipes (namely, the maximum distance between any two points which are on the outer edge of the planar portion of the collar and which are opposed to each other across the center of the collar is substantially greater than the outer diameter of the branch pipe and the collar has a thickness of 1 mm or greater and a bending elasticity of 30 kg/mm² or greater) so that the branch pipe lining assembly can be employed in both lining socket-joined branch pipes and lining mortar-joined branch pipes, and consequently a high economical rationalization is achieved.

The invention will be further described with reference to the accompanying drawings, wherein:
Fig. 1 is a cross section of a branch pipe lining assembly according to the invention;
Fig. 2 is an enlarged, detailed view of the portion A of Fig. 1;
Fig. 3 consists of three top plan views (a), (b) and (c) of three different collars of the branch pipe lining assembly, respectively;
Figs. 4 to 11 are cross sectional views illustrating various steps of a branch pipe lining method according to the invention;
Fig. 12 is a cross sectional view illustrating a branch pipe joined to a main pipe by means of a socket, according to the prior art; and
Fig. 13 is a cross sectional view illustrating a branch pipe joined to a main pipe by means of mortar, according to the prior art.

Next, an embodiment of the invention will be described with reference to the attached drawings. Certain terminology is used in the following description for convenience only and is not limiting: the words such as right, left, lower and upper designate directions in the drawings to which reference is made.

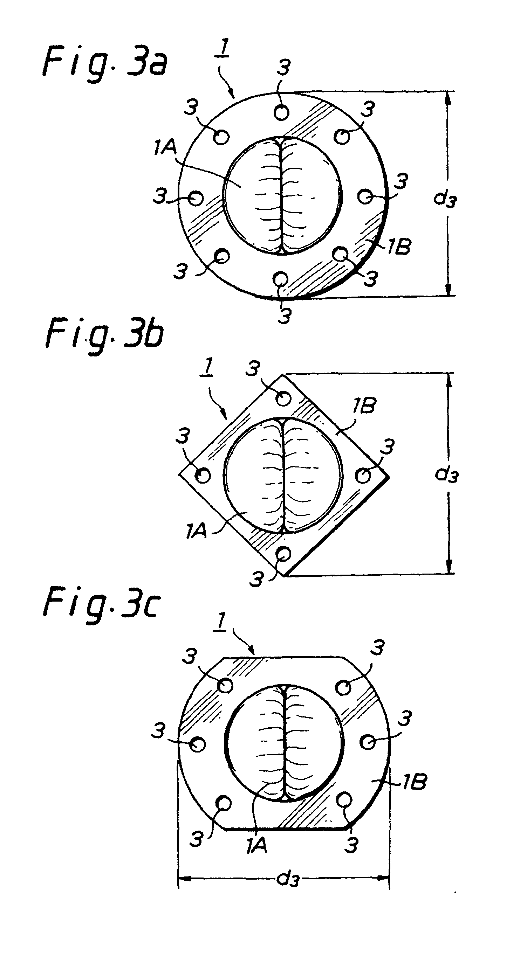

Fig. 1 is a sectional view of a branch pipe lining assembly according to an embodiment of the invention. Fig. 2 is an enlarged, detailed view of the portion A of Fig. 1. Fig. 3 consists of three top plan views (a), (b) and (c) of three different collars of branch pipe lining assembly, respectively.

A branch pipe lining assembly 1, shown in Fig. 1, includes a hardenable liquid resin-containing flexible member 1A (hatched in Fig. 1), which is a tubular liquid resin-absorbable fabric material soaked with an uncured thermosetting liquid resin, a rigid collar 1B (cross-hatched in Fig. 1) formed by turning an open end of the tubular liquid resin-absorbable fabric material inside out and flattening and hardening a peripheral portion of the turned part of the fabric material, and a highly airtight polymeric film 2 which airtightly closes the other end (lower end) of the tubular liquid resin-absorbable fabric material and covers the entire outer face of the hardenable liquid resin-containing member 1A and that face (inner circumferential face, as seen in Fig. 1) of a portion of the collar 1B which is immediately continuous from the upper end of the outer face of the member 1A. Thus, as shown in detail in Fig. 2, the airtight polymeric film 2 hermetically seals a face of the branch pipe lining assembly 1 including the boundary portion where the hardenable liquid resin-containing member 1A meets the rigid collar 1B.

As shown in Fig. 3, the shape of the collar 1B of the branch pipe lining assembly 1 can be circular as in the drawing (a), or square as in the drawing (b), or a truncated circle as in the drawing (c). A plurality of circular holes 3 aligned in a circular row are made through the collar 1B.

The above-mentioned liquid resin-absorbent tubular fabric material as the flexible member 1A of the branch pipe lining assembly 1 is a nonwoven fabric obtained by bonding or punch-pressing a mass of fiber such as of polyester, polypropylene, and acrylic polymer. The liquid resin to be absorbed in this fabric material can be selected from thermosetting resins such as unsaturated polyester, epoxy, and vinyl ester. The polymeric film 2 is prepared in the form of a seamless tube by the inflation method, and can be a three-kind five-layer film composed of highly styrene-resistant polyethylene/nylon/polyethylene composite adhered to each other with Admer or an ionomer, or can be polyurethane film, polyester elastomer film, etc. This polymeric film 2 is attached to the outer surfaces of the hardenable liquid resin-containing member 1A and the inner circumferential face of the collar 1B by welding, bonding or coating.

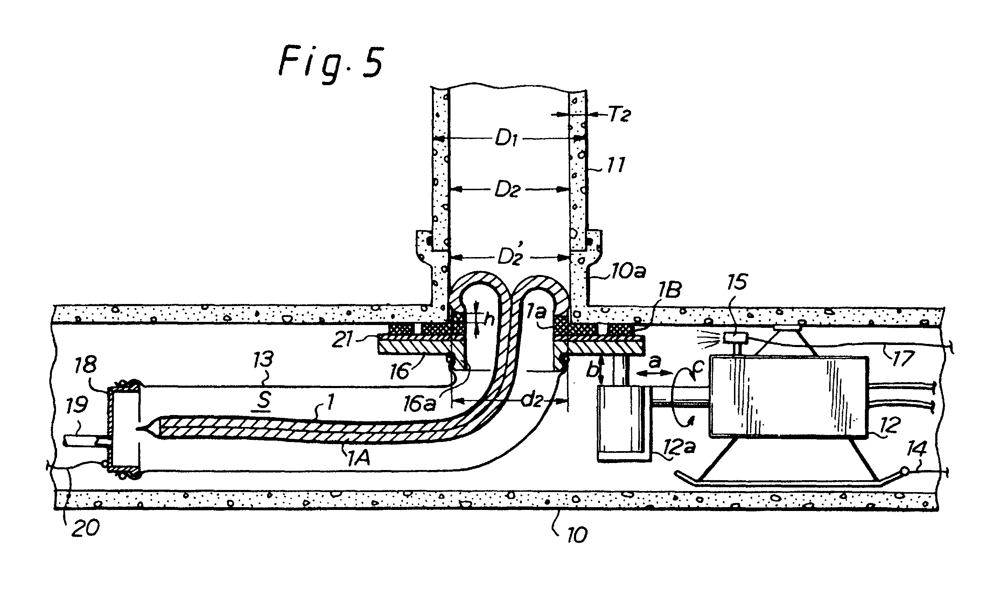

The collar 1B of the branch pipe lining assembly 1 is created in the following manner. The upper end portion of the tubular liquid resin-absorbable fabric material is turned inside out and is impregnated with a liquid thermosetting resin such as unsaturated polyester resin, epoxy resin, vinyl ester resin, phenolic resin, urethane resin, and silicone resin, and the collar 1B is hardened after it is flexed to have a curvature that is nearly equal to the curvature of the inner wall of a main pipe 10 (ref. Fig. 4 and 5). The collar 1B includes a cylindrical part 1a or a range 1a of protuberances aligned circularly, which is/are continuous from the hardenable resin-absorbent member 1A, and generally vertical to the planar portion of the collar 1B. The height h of the cylindrical part or the protuberance range 1a is designed to be 0.5 mm - 50mm, and the outer diameter d₂ of the cylindrical part or the protuberance range is made 0.5 mm - 50 mm smaller than the inner diameter D₂ of the branch pipe 11. (0.5 mm < D₂ - d₂ < 50 mm; ref. Figs. 4 and 5).

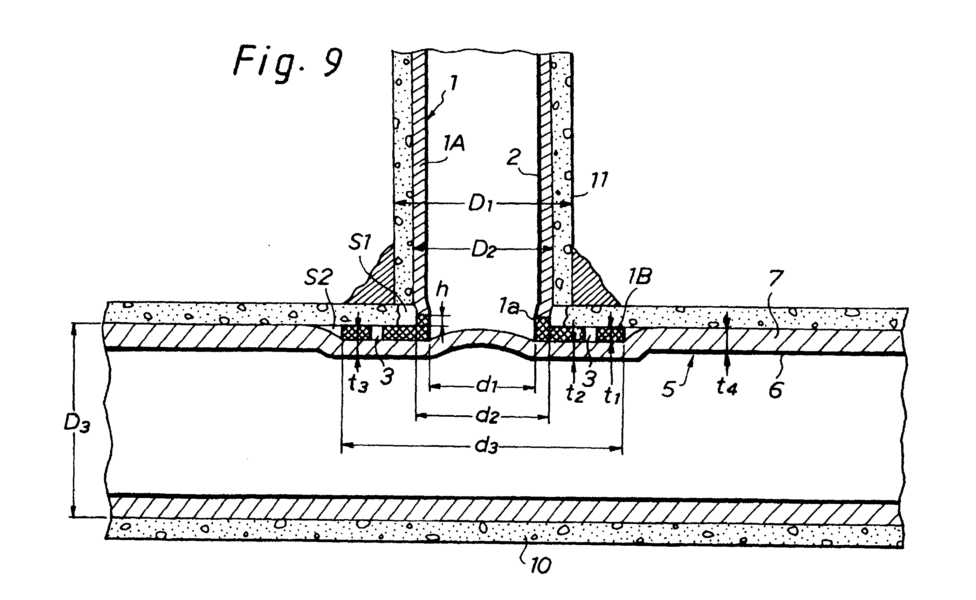

In the branch pipe lining assembly 1 of the present invention, the maximum distance d₃ between any two points which are on the outer edge of the planar portion of the collar 1B and which are opposed to each other across the center of the collar 1B is designed to be substantially greater than the outer diameter D₁ of the branch pipe 11 (d₃ > D₁; ref. Figs. 3, 4 and 5). The thickness t₁ of the planar portion of the collar 1B is designed to be 1 mm or greater, and its bending elasticity is designed to be 30 kg/mm² or greater. The requirements that the collar thickness be 1 mm or greater and the bending elasticity be 30 kg/mm² or greater are determined on the assumptions that the thickness of the branch pipe lining assembly 1 is 2.0 - 6.0 mm, that the branch pipe 11 is either a Hume pipe, a pottery pipe or a polyvinyl chloride pipe, that the outer diameter D₁ of the branch pipe 11 is 90 - 300 mm, that the inner diameter D₂ of the branch pipe 11 is 75 - 250 mm, that the inner diameter D₃ of the main pipe 10 is 150 - 600 mm (ref. Fig. 9), and that the pressure of the pressurized fluid is 0.1 - 2.0 kgf/cm².

As shown in detail in Fig. 2, the outer face of the hardenable liquid resin-containing member 1A and the inner peripheral face of the collar 1B are airtightly sealed with the polymeric film 2 over the area where the two meet. Although in the branch pipe lining assembly 1 of this embodiment, the inner face of that portion of the collar 1B which is immediately continuous from the outer face of the hardenable liquid resin-containing member 1A is covered up with the polymeric film 2, it is possible to seal the entire surface of the collar 1B with the polymeric film 2, and it is also possible to cover the surfaces with a coating material in substitution of the polymeric film 2.

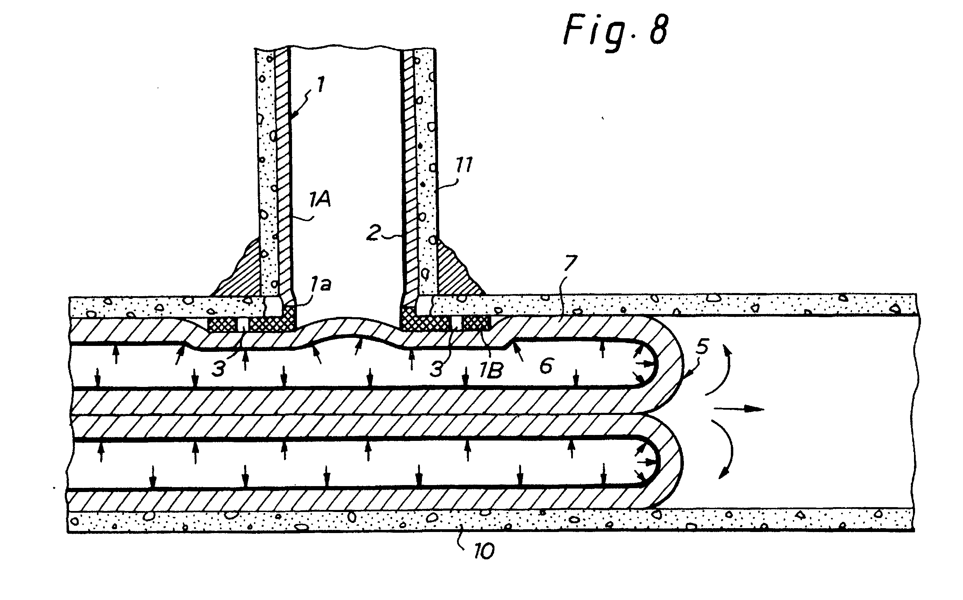

Next, with reference to Figs. 4 through 11, there will be explained how the pipe lining method of the present invention is carried out, in which the branch pipe lining assembly 1 of Fig. 1 and a main pipe liner 5, to be described later with reference to Fig. 8, are used. Figs. 4 through 11 are cross sectional views illustrating the method of the invention in the order of lining an underground pipe.

In the first place, according to the pipe lining method of the present invention, the branch pipe lining assembly 1 is utilized to line the branch pipe 11, and this lining assembly 1 is compatible for branch pipes of different constructions, namely the mortar-joined branch pipe 11 (Fig. 4) and the socket-joined branch pipe 11.

Upon the start of this branch pipe lining operation, the resin-absorbable flexible member 1A of the branch pipe lining assembly 1 is caused to be impregnated with an uncured curable liquid resin in a conventional way. The curable liquid resin may be a thermosetting resin such as an unsaturated polyester resin, epoxy resin, and vinyl ester resin.

In Fig. 4, reference numeral 10 designates an underground main sewer pipe, and reference numeral 11 designates a branch pipe having a relatively small diameter. The branch pipe 11 is connected to the main pipe 10 by means of mortar. A remote-controlled robot 12 together with a pressure bag 13, the branch pipe lining assembly 1, etc. has been introduced into the main pipe 10.

The remote-controlled robot 12 is hydraulically operated, and its head 12a is hydraulically driven to reciprocate in the directions shown by a double-pointed arrow a and also to rotate as shown by a double-pointed circular arrow **C**. One pull rope 14 is tied at the rear part of the sleigh of the robot 12. A TV camera 15 for monitoring is affixed on top of the main body of the robot 12. Further, the head 12a carries a hydraulically operated piston cylinder, which has an upward piston rod adapted to shift vertically as indicated by a double-pointed arrow **b**. A pressure bag connector collar 16 is detachably supported by the piston rod of the head 12a of the remote-controlled robot 12. The TV camera 15 is connected to a monitor device, not shown, installed on the ground by way of a cable 17.

One end of the pressure bag 13 is affixed to the outer circumferential face of a cylindrical portion 16a of the pressure bag connector collar 16, and the other end of the pressure bag 13 is closed by means of a cap 18. An air hose 19 and a pull rope 20 are connected to the cap 18, and the air hose 19 is connected to a compressor, not shown, installed on the ground.

The upper face of the pressure bag connector collar 16 is attached to the lower face of the rigid collar 1B of the branch pipe lining assembly 1 with a packing ring 21 sandwiched between them, and the resin-absorbable flexible member 1A of the branch pipe lining assembly 1, not including the collar 1B, is housed in the pressure bag 13, as shown.

When the ropes 14 and 20 are pulled, the robot 12, the pressure bag connector collar 16, the pressure bag 13, the branch pipe lining assembly 1, etc. are shifted in one body within the main pipe 10. Thus, while monitoring the positions of the elements in the main pipe 10 by means of the TV camera 15 mounted on the robot 12, the collar 1B of the branch pipe lining assembly 1 is brought to the position directly below the opening by which the branch pipe 11 opens into the main pipe 10, as shown in Fig. 4. At this step, the robot 12 is driven to raise the pressure bag connector collar 16 until the collar 1B of the branch pipe lining assembly 1 closely fits on that part of the inner wall of the main pipe 10 which constitutes the margin surrounding the branch pipe opening.

If the branch pipe 11 is mortar-joined, as in Fig. 4, the branch pipe 11 is joined to the main pipe 10 via an uneven, relatively large hole (having a diameter greater than the inner diameter of the branch pipe 11), by which the branch pipe 11 opens into the main pipe 10, so that it is relatively easy to align the collar 1B of the branch pipe lining assembly 1 with the branch pipe opening. In the case of the mortar-joined branch pipes, therefore, the performance of the cylindrical part 1a or a range 1a of protuberances is not necessarily required.

On the other hand, if the branch pipe 11 is socket-joined, as in Fig. 5, the inner diameter D₂' of the socket 10a is equal to the inner diameter D₂ of the branch pipe 11 (D₂' = D₂), and thus the size of the branch pipe opening by which the socket-joined branch pipe opens into the main pipe 10 is smaller than the size of the branch pipe opening by which the mortar-joined branch pipe (Fig. 4) opens into the main pipe 10. For this reason, the alignment of the collar 1B of the branch pipe lining assembly 1 with the socket 10a is relatively difficult. However, in the branch pipe lining assembly 1 of the present invention, the collar 1B is formed with the cylindrical part 1a or the protuberance range 1a, which has a height h of 0.5 - 50 mm and an outer diameter d₂, which is 0.5 - 50 mm smaller than the inner diameter D₂ of the branch pipe 11, so that it is now easy to align the collar 1B with the branch pipe opening (lower opening of the socket 10a) because the cylindrical part 1a or the protuberance range 1a, whose diameter d₂ is smaller than the inner diameter D₂ of the branch pipe 11, can be used as a guide, and thus it is possible to fix the collar 1B closely on that part of the inner wall of the main pipe 10 which constitutes the margin surrounding the branch pipe opening.

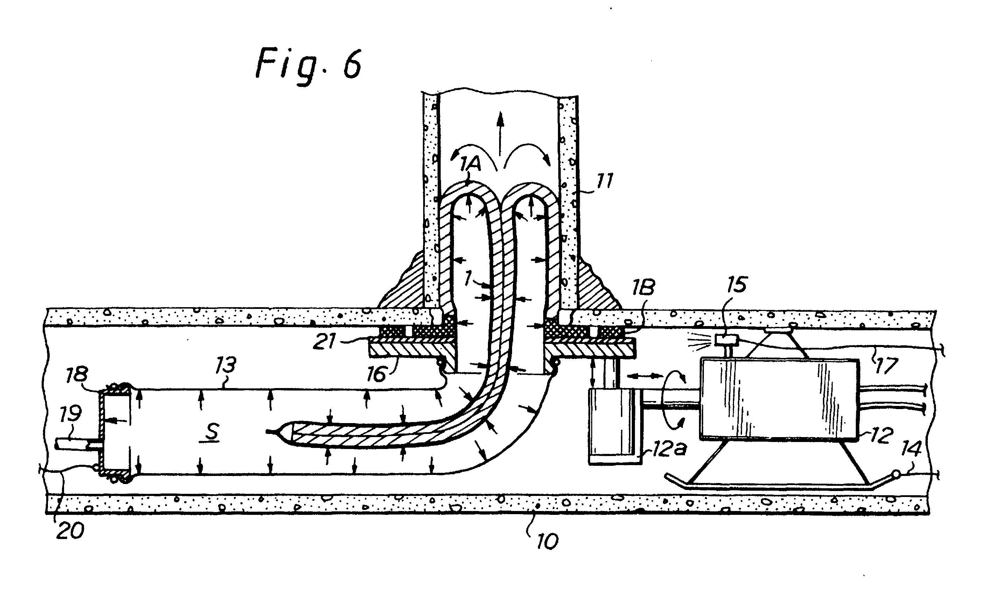

Then, a compressor, not shown, installed on the ground is driven to supply compressed air via the air hose 19 to a closed space S, which is defined by the pressure bag 13 and the branch pipe lining assembly 1, whereby the resin-absorbent flexible member 1A of the branch pipe lining assembly 1 housed in the pressure bag 13 is everted under the pressure of the compressed air, as shown in Fig. 6, and is caused to advance upward inside the branch pipe 11 from the main pipe 10 toward the ground surface.

In the case of lining a mortar-joined branch pipe 11, when the collar 1B of the branch pipe lining assembly 1 is pressed by the air pressure upon that part of the inner wall of the main pipe 10 which constitutes the margin surrounding the branch pipe opening, a certain portion of the collar 1A (at maximum that ring-like part having an inner diameter D₂ and a width equal to the thickness T₂ of the branch pipe 11) fails to be supported by the inner wall of the main pipe 10; however, since the collar 1B of the branch pipe lining assembly 1 of the present invention is designed such that the maximum distance d3 between any two points that are on the outer edge of the planar portion of the collar 1B and are opposed to each other across the center of the collar 1B is substantially greater than the outer diameter D₁ of the branch pipe 11 and the thickness t1 of the planar portion of the collar 1B is 1 mm or greater and the bending elasticity of the planar portion of the collar 1B is 30 kg/mm² or greater so that that portion of the collar 1A which is not supported by the main pipe 10 withstands the air pressure without being deformed, thus the compressed air does not leak at the collar 1B during the eversion of the branch pipe lining assembly 1, and consequently, the lining of the branch pipe 11 with the everted resin-absorbent member 1A of the branch pipe lining assembly 1 is effected flawlessly.

On the other hand, in the case of lining a socket-joined branch pipe 11, once the cylindrical part 1a or the protuberance range 1a of the collar 1B of the branch pipe lining assembly 1 has been fitted in the opening of the branch pipe 11 (the socket 10a of the main pipe 10), the collar 1B does not move even when it is pressed by the air pressure, and moreover since the entire body of the collar 1B is backed by the inner wall of the main pipe 10, the collar 1B is prevented from undergoing deformation, nor does the compressed air leak at the collar 1B during the eversion of the resin-absorbent member 1A of the branch pipe lining assembly 1; consequently, the lining of the branch pipe 11 with the everted resin-absorbent member 1A of the branch pipe lining assembly 1 is performed flawlessly. Hence, in the case of lining the socket-joined branch pipe 11, there is no need for the maximum distance d₃ across the collar 1B of the branch pipe lining assembly 1 to be made greater than the outer diameter D₁ of the branch pipe 11, nor is it necessary to make the thickness of the collar 1B to be 1 mm or greater, or the bending elasticity of the planar portion of the collar 1B to be 30 kg/mm² or greater.

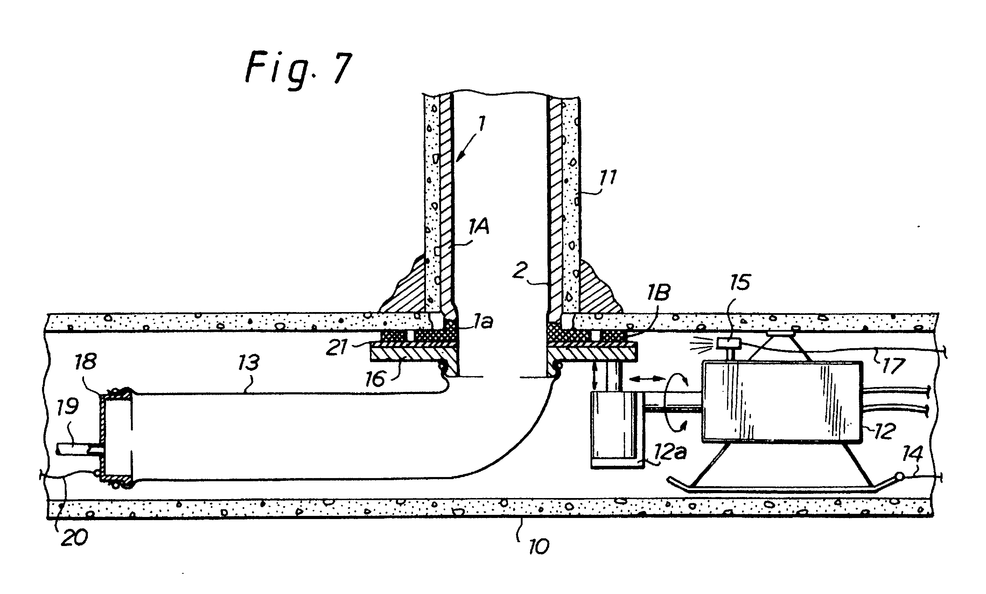

Now, at the time prior to eversion, a face of the branch pipe lining assembly 1 including the boundary portion where the outer face of the hardenable liquid resin-absorbent member 1A meets the inner circumferential face of the rigid collar 1B is hermetically sealed by the airtight polymeric film 2, as shown in detail in Fig. 2; hence, an interior face of the everted branch pipe lining assembly 1 including the boundary where the hardenable liquid resin-absorbent member 1A meets the collar 1B of the branch pipe lining assembly 1 is hermetically covered with the polymeric film 2, as shown in Fig. 7. As a result, leakage of the compressed air at the boundary where the resin-absorbent member 1A meets the collar 1B is avoided, and a high airtightness of the closed space S is attained, and consequently the lining of the branch pipe 11 with the everted resin-absorbent member 1A of the branch pipe lining assembly 1 is always effected flawlessly. If a lubricant such as oil or wax, or a surface active agent is applied to the outer face of the branch pipe lining assembly 1 before eversion and/or the inner face of the pressure bag 13, the frictional resistance between the branch pipe lining assembly 1 and the pressure bag 13, which occurs when the branch pipe lining assembly 1 is everted into the branch pipe 11, is attenuated and the eversion takes place more smoothly than otherwise.

When the insertion by eversion of the branch pipe lining assembly 1 through the full length of the branch pipe 11 is completed, a pressurized fluid, such as compressed air, is applied into the everted bag of the branch pipe lining assembly 1, whereby the branch pipe lining assembly 1 is closely pressed against the inner walls of the branch pipe 11. While keeping this state, the hardenable liquid resin-containing flexible member 1A of the branch pipe lining assembly 1 is heated by a suitable heating means so as to harden the thermosetting resin soaked through the flexible member 1A. As a result, the inner face of the branch pipe 11 is lined with the hardened branch pipe lining assembly 1, as shown in Fig. 7.

When the branch pipe lining assembly 1 is pressed against the inner walls of the branch pipe 11, the liquid resin oozes from the unsealed face of the flexible member 1A and some enters an annular space S1 (Fig. 9). This annular space S1 is formed, only in the case of mortar-joined branch pipe, between the edge of the branch pipe opening of the main pipe 10, the lower end of the branch pipe 11, and the branch pipe lining assembly 1. Thus, when the resin is heated this space S1 is clogged with the hardened resin.

During this hardening of the branch pipe lining assembly 1 also, the collar 1B of the branch pipe lining assembly 1 remains undeformed so that the pressurized fluid (compressed air) does not leak at the collar 1B, and thus the close adhesion of the flexible member 1A of the branch pipe lining assembly 1 to the inner walls of the branch pipe 11 is attained reliably. Moreover, also in the case of hardening the branch pipe lining assembly 1 everted into the socket-joined branch pipe 11, the collar 1B of the branch pipe lining assembly 1 does not deform, as shown in Fig. 5, so that the close adhesion of the flexible member 1A to the inner walls of the branch pipe 11 is attained reliably.

When the branch pipe 11 is thus lined, the remote-controlled robot 12 together with the pressure bag connector collar 16, the packing ring 21, and the pressure bag 13 is withdrawn from the main pipe 10. Then only the branch pipe lining assembly 1, whose resin-absorbable flexible member 1A is now rigidified, is left in the pipes 10 and 11, and the branch pipe lining operation is completed. The main pipe 10 is lined next, and this will be explained with reference to Figs. 8 - 11.

As shown in Fig. 8, the main pipe liner 5 is inserted by eversion into the main pipe 10 under fluid pressure such as air pressure. The main pipe liner 5 consists of a tubular resin-absorbent fabric material 7 impregnated with an uncured hardenable liquid resin ( thermosetting resin in this embodiment) and a highly airtight polymeric film 6, which covers up the outer face of the tubular fabric material 7. The tubular resin-absorbent fabric material 7 is a nonwoven fabric obtained by bonding or punch-pressing a mass of fiber such as polyester, polypropylene, and acrylic polymer. The liquid resin to be absorbed in this fabric material can be selected from thermosetting resins such as unsaturated polyester, epoxy, and vinyl ester. The polymeric film 6 is prepared in the form of a seamless tube by the inflation method, and may be composed of a highly styrene-resistant material such as polyurethane, polyethylene, nylon, ethylene vinyl alcohol, *Admer*, an ionomer, and polyvinyl chloride.

When the main pipe liner 5 everted and inserted into the main pipe 10 extends throughout the entire length of a unit of the main pipe 10, as shown in Fig. 9, fluid pressure is exerted inside the main pipe liner 5 so that the main pipe liner 5 is inflated and closely pressed against the inner walls of the main pipe 10. Then, while maintaining this state, the main pipe liner 5 is heated by a suitable heating means, so that the thermosetting resin impregnated in the main pipe liner 5 is cured to harden.
Thereupon, the main pipe 10 is internally lined with the hardened main pipe liner 5, and the main pipe 10 is repaired. When the main pipe liner 5 is pressed against the inner walls of the main pipe 10, the uncured liquid resin oozes out from the unsealed face of the liner 5 and some of it reaches the annular space S1 by way of the holes 3 made through the collar 1B of the branch pipe lining assembly 1, and-fills the space S1 in the case that the space S1 has not been entirely filled by the resin from the branch pipe lining assembly 1. Also, some oozed liquid resin enters and fills another annular space S2, which is formed between the inner wall of the main pipe 10, the unsealed face of the liner 5, and the outer edge of the collar 1B. When the heating of the main pipe liner 5 is heated, the liquid resin filling these spaces S1, S2 and the holes 3 hardens to thereby clog them. As a result, the collar 1B of the branch pipe lining assembly 1 is closely combined with the main pipe liner 5, so that infiltration of underground water, etc. at the collar 1B is virtually prevented.

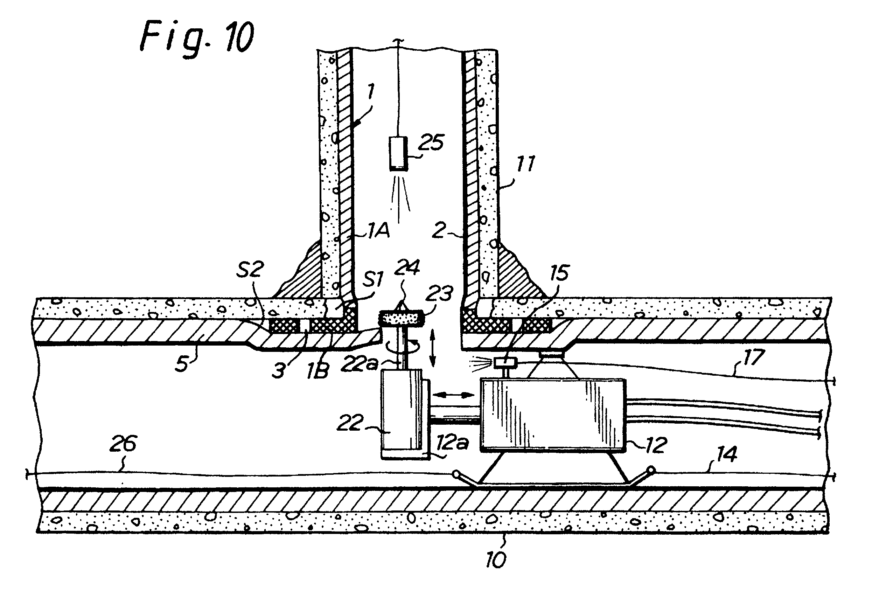

Now, when the inner wall of the main pipe 10 is lined with the main pipe liner 5, the branch pipe opening of the main pipe 10 (the opening by which the branch pipe 11 opens into the main pipe 10) is closed by the main pipe liner 5, so that it is necessary to make a hole through the main pipe liner 5 where the branch pipe 11 is closed to restore the communication between the main pipe 10 and the branch pipe 11, as shown in Fig. 10.

With reference to Fig. 10 again, an on-the-sleigh borer robot 12 is introduced inside the main pipe 10 in order to effect the boring operation on the main pipe liner 5. This borer robot 12 has a horizontal head rod, which is hydraulically driven to reciprocate in the axial direction as shown by a double-pointed arrow. A hydraulically operated motor 22 having an output shaft 22a is mounted on a head 12a supported by the head rod of the borer robot 12. The output shaft 22a is adapted to shift vertically as indicated by a double-pointed arrow. A wheel grinder 23, which has an outer diameter smaller than the diameter of the branch pipe opening, is locked about an end of the output shaft 22a of the hydraulic motor 22. The upper and lower side faces of the grinder 23 perpendicular to the central axis as well as the peripheral surface of rotation parallel to the central axis are made abrasive and a tapered reamer 24 is attached in the center of the upper side face.

One pull rope 26 is tied at the front part of the sleigh of the robot 12, and another pull rope 14 is tied at the rear part of the sleigh. A TV camera 15 for monitoring is affixed on top of the main body of the robot 12.

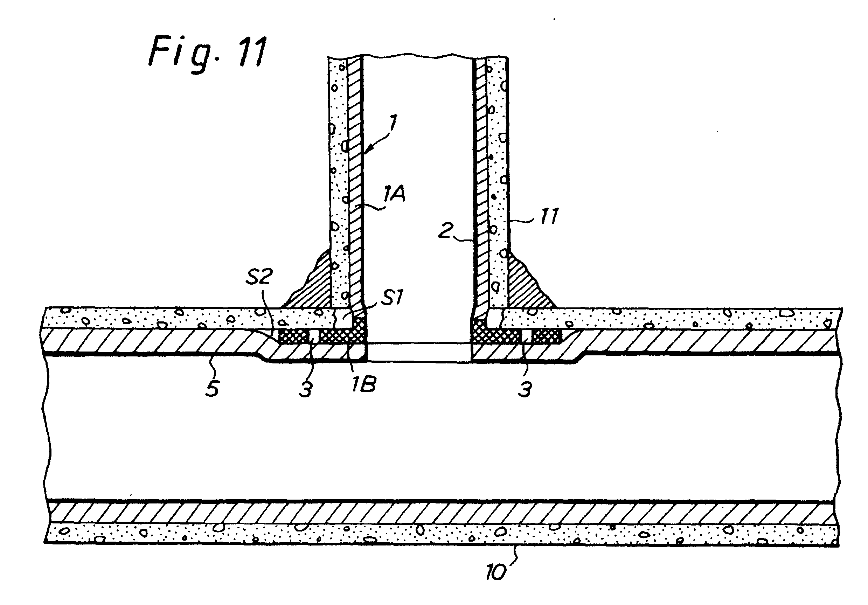

While its position in the main pipe 10 is being monitored by means of the TV camera 15 mounted on the robot 12 and by means of another TV camera 25 introduced in the branch pipe 11 from the ground, the robot 12 is moved to and fro in the main pipe 10 by means of the pull ropes 14 and 26 until the grinder 23 comes to a desired position for the cutting operation. Then, the hydraulically operated motor 22 is driven to spin the output shaft 22a so that the grinder 23 is turned at a high speed; at the same time the output shaft 22a is caused to rise and drop slowly so that the grinder 23 is raised and lowered. As a result, the tapered reamer 24 bores open a small hole in the main pipe liner 5, and then the abrasive grinder 23 bores a big hole, and through further controlling of the position of the grinder 23 by means of the various operation of the head 12a, that portion of the main pipe liner 5 which closes the branch pipe opening is ground off by the grinder 23. Thus, the branch pipe 11 opens into the main pipe 10 whereby both pipes communicate with each other via this opening, as shown in Fig. 11.

When a part of the main pipe liner 5 is bored through, as described above, the strength of the main pipe liner 5 decreases at areas in the vicinity of the bore; however, in this embodiment, at the completion of the lining of the main pipe 10, as shown in Fig. 9, the sum t₃ of the thickness t₁ of the collar 1B of the branch pipe lining assembly 1 and the thickness t₂ of that part of the main pipe liner 5 which overlaps the collar 1B is greater than the thickness t₄ of the other parts the main pipe liner 5 (t₁ plus t₂ > t₄), so that the decrease in the strength of the main pipe liner 5 in the vicinity of the bore is compensated for by the presence of the collar 1B.

In this regard, when the everted main pipe liner 5 is inflated and pressed against the inner walls of the main pipe 10 by air pressure, that part of the main pipe liner 5 which overlaps the collar 1B tends to be depressed to be thinner than the other parts of the main pipe 10. In order to attain the above inequality of t₁ plus t₂ > t₄ in spite of this tendency, it is suggested that the thickness t₁ of the collar 1B of the branch pipe lining assembly 1 is designed to be 25% or more of the after-compression thickness t₄ of the main pipe liner 5, and the rate of thickness decrease of that part of the main pipe liner 5 which overlaps the collar 1B is designed to be 25% lower than that of the other parts of the main pipe liner 5. As a result, when the lining of the main pipe 10 is completed, the sum t₃ of the thickness t₁ of the collar 1B of the branch pipe lining assembly 1 and the thickness t₂ of that part of the main pipe liner 5 which overlaps the collar 1B becomes greater than the thickness t₄ of the other parts of the main pipe liner 5 (t₃ > t₄). The rate of thickness decrease of the main pipe liner 5 can be varied by adjusting the bulk density of the nonwoven fabric of which the main pipe liner 5 is made.

As described above, the branch pipe lining assembly 1 of this embodiment of the present invention satisfies the following requirements ascribable to lining of a socket-joined branch pipe: (i) the collar 1B includes a cylindrical part 1a or a circular range 1a of protuberances, which is continuous from the hardenable resin-absorbent member 1A, and generally vertical to the planar portion of the collar 1B; (ii) the height h of the cylindrical part 1a or the circular protuberance range 1a is 0.5 - 50 mm; and (iii) the outer diameter d₂ of the cylindrical part 1a or the circular protuberance range 1a is designed to be 0.5 mm - 50 mm smaller than the inner diameter D₂ of the branch pipe 11. Furthermore, the branch pipe lining assembly 1 of this embodiment also satisfies all the requirements attributable to lining of a mortar-joined branch pipe: (i) the maximum distance d₃ between any two points which are on the outer edge of the planar portion of the collar 1B and which are opposed to each other across the center of the collar 1B is designed to be substantially greater than the outer diameter D₁ of the branch pipe 11; (ii) the thickness t₁ of the collar 1B is 1 mm or greater; (iii) the bending elasticity of the collar 1B is 30 kg/mm² or greater. Consequently, the branch pipe lining assembly 1 can be used for both lining the socket-joined branch pipe 11 of Fig. 5 and lining the mortar-joined branch pipe 11 of Fig. 4, and as a result, a high economical rationalization is achieved.

In the above embodiment, there is explained only the lining operation wherein the mortar-joined branch pipe 11 and the main pipe 10 having this branch pipe 11 are lined, but a lining operation wherein a socket-joined branch pipe, as shown in Fig. 5, is involved can be conducted equally well in accordance with the invention.

## Claims

1. A branch pipe lining assembly (1) having: a liquid resin-absorbent, flexible tubular branch pipe liner (1A); a rigid annular collar (1B) formed at one end of said tubular branch pipe liner; and an airtight polymeric film (2), with which the entire outer face of said tubular branch pipe liner (1A) is closely covered; wherein said rigid annular collar (1B) comprises a planar portion and a generally cylindrical protuberance (1a) extending from an inner periphery of said planar portion in a direction generally perpendicular to said planar portion and meeting at its end with said one end of the tubular branch pipe liner (1A); said generally cylindrical protuberance (1a) has a height (h) of 0.5 to 50 mm as measured from a closer side face of said planar portion; the outer diameter (d₂) of said generally cylindrical protuberance (1a) is 0.1 to 50 mm smaller than the inner diameter (D₂) of a branch pipe (11) to be lined with said branch pipe lining assembly; the maximum distance (d₃) between any two points which are on the outer edge of the planar portion and which are opposed to each other across the center of the collar (1B) is substantially greater than the outer diameter (D₁) of said branch pipe; and the planar portion has a thickness (t₁) of 1 mm or greater and a bending elasticity of 30 kg/mm² or greater; and **characterized in that** a plurality of penetrating holes (3) aligned in a circular row are formed through the planar portion of the collar (1B).

2. A branch pipe lining assembly as claimed in claim 1, **characterized in that** said generally cylindrical protuberance (1a) is a solid cylinder in form.

3. A branch pipe lining assembly as claimed in claim 1, **characterized in that** said generally cylindrical protuberance (1a) is composed of a number of intermittent rises aligned in a circular row.

4. A branch pipe lining assembly as claimed in claim 1, **characterized in that** said generally cylindrical protuberance (1a) is composed of a circular range of intermittent rises.

5. A branch pipe lining assembly as claimed in any of claims 1 to 4, **characterized in that** said polymeric film (2) extends to cover up that area where the generally cylindrical protuberance (1a) of the collar (1B) meets with said one end of the tubular branch pipe liner (1A), to seal said pipe liner (1A) and said collar (1B).

6. A branch pipe lining assembly as claimed in any of claims 1 to 4, **characterized in that** a coating material is applied to that boundary area where the generally cylindrical protuberance (1a) of the collar (1B) meets with said one end of the tubular branch pipe liner (1A), to seal said pipe liner (1A) and said collar (1B).

7. A pipe lining method for lining a main pipe (10) and a branch pipe (11) branching off from the main pipe, comprising the steps of:
(a) providing a branch pipe lining assembly as claimed in any of claims 1 to 6;
(b) attaching said collar (1B) to that portion of the inner wall of the main pipe (10) which constitutes the margin of a branch pipe opening which forms an entrance to the branch pipe (11);
(c) everting said branch pipe liner (1A) under fluid pressure into the branch pipe (11) from the main pipe (10);
(d) hardening said liquid resin soaking said branch pipe liner (1A) to thereby harden said branch pipe liner while the branch pipe liner is kept inflated;
(e) preparing a flexible main pipe lining assembly having a liquid resin-absorbent, flexible tubular main pipe liner (5), and an airtight polymeric film (6), with which the entire outer face of said main pipe liner is closely covered;
(f) everting said main pipe liner (5) under fluid pressure into the main pipe (10);
(g) hardening said liquid resin soaking said main pipe liner (5) to thereby harden said main pipe liner while the main pipe liner is kept inflated; and
(h) making a hole through that part of the main pipe liner (5) which is closing said branch pipe opening.

8. A method as claimed in claim 7, **characterized in that**, as of the time of said step (g), the sum (t₃) of the thickness (t₁) of the planar portion of the collar (1B) and the thickness (t₂) of that part of the main pipe liner (5) which overlaps the planar portion of the collar is greater than the thickness (t₄) of the other parts of the main pipe liner.

## Patentansprüche

1. Abzweigrohrauskleidungsanordnung (1), die aufweist: eine flüssige, harzaufhehmende, elastische, rohrförmige Abzweigrohrauskleidung (1A); einen starren, ringförmigen Ring (1B), der an einem Ende der rohrförmigen Abzweigrohrauskleidung gebildet wird; und eine luftdichte polymere Folie (2), mit der die gesamte Außenfläche der rohrförmigen Abzweigrohrauskleidung (1A) eng anliegend überzogen ist; worin der starre, ringförmige Ring (1B) einen ebenen Abschnitt und einen im allgemeinen zylindrischen Vorsprung (1a) aufweist, der sich von einem inneren Umfang des ebenen Abschnittes in einer Richtung im allgemeinen senkrecht zum ebenen Abschnitt erstreckt und an seinem Ende mit dem einen Ende der rohrförmigen Abzweigrohrauskleidung (1A) zusammentrifft; wobei der im allgemeinen zylindrische Vorsprung (1a) eine Höhe (h) von 0,5 bis 50 mm aufweist, gemessen von der näher liegenden Seitenfläche des ebenen Abschnittes; wobei der Außendurchmesser (d₂) des im allgemeinen zylindrischen Vorsprunges (1a) 0,1 bis 50 mm kleiner ist als der Innendurchmesser (D₂) eines Abzweigrohres (11), das mit der Abzweigrohrauskleidungsanordnung ausgekleidet werden soll; wobei der maximale Abstand (d₃) zwischen irgendwelchen zwei Punkten, die auf dem äußeren Rand des ebenen Abschnittes sind und die zueinander über die Mitte des Ringes (1B) hinweg gegenüberliegend sind, im wesentlichen größer ist als der Außendurchmesser (D₁) des Abzweigrohres; und wobei der ebene Abschnitt eine Dicke (t₁) von 1 mm oder größer und eine Biegeelastizität von 30 kg/mm² oder größer aufweist; und **dadurch gekennzeichnet, daß** eine Vielzahl von durchgehenden Löchern (3), die in einer kreisförmigen Reihe ausgerichtet sind, durch den ebenen Abschnitt des Ringes (1B) gebildet wird.

2. Abzweigrohrauskleidungsanordnung nach Anspruch 1, **dadurch gekennzeichnet, daß** der im allgemeinen zylindrische Vorsprung (1a) in der Form ein Vollzylinder ist.

3. Abzweigrohrauskleidungsanordnung nach Anspruch 1, **dadurch gekennzeichnet, daß** der im allgemeinen zylindrische Vorsprung (1a) aus einer Anzahl von unterbrochenen Erhöhungen besteht, die in einer kreisförmigen Reihe ausgerichtet sind.

4. Abzweigrohrauskleidungsanordnung nach Anspruch 1, **dadurch gekennzeichnet, daß** der im allgemeinen zylindrische Vorsprung (1a) aus einem kreisförmigen Bereich von unterbrochenen Erhöhungen besteht.

5. Abzweigrohrauskleidungsanordnung nach einem der Ansprüche 1 bis 4, **dadurch gekennzeichnet, daß** sich die polymere Folie (2) erstreckt, um jene Fläche abzudecken, wo der im allgemeinen zylindrische Vorsprung (1a) des Ringes (1B) mit dem einen Ende der rohrförmigen Abzweigrohrauskleidung (1A) zusammentrifft, um die Rohrauskleidung (1A) und den Ring (1B) abzudichten.

6. Abzweigrohrauskleidungsanordnung nach einem der Ansprüche 1 bis 4, **dadurch gekennzeichnet, daß** ein Beschichtungsmaterial auf jene Grenzfläche aufgebracht wird, wo der im allgemeinen zylindrische Vorsprung (1a) des Ringes (1B) mit dem einen Ende der rohrförmigen Abzweigrohrauskleidung (1A) zusammentrifft, um die Rohrauskleidung (1A) und den Ring (1B) abzudichten.

7. Verfahren zur Auskleidung eines Rohres für das Auskleiden eines Hauptrohres (10) und eines Abzweigrohres (11), das vom Hauptrohr abzweigt, wobei es die folgenden Schritte aufweist:
(a) Bereitstellen einer Abzweigrohrauskleidungsanordnung nach einem der Ansprüche 1 bis 6;
(b) Befestigen des Ringes (1B) an jenem Abschnitt der Innenwand des Hauptrohres (10), der den Rand einer Abzweigrohröffnung bildet, die einen Eingang zum Abzweigrohr (11) bildet;
(c) Umstülpen der Abzweigrohrauskleidung (1A) unter Fluiddruck in das Abzweigrohr (11) vom Hauptrohr (10) aus;
(d) Aushärten des flüssigen Harzes, das die Abzweigrohrauskleidung (1A) durchtränkt, um dadurch die Abzweigrohrauskleidung auszuhärten, während die Abzweigrohrauskleidung aufgeblasen bleibt;
(e) Herstellen einer elastischen Hauptrohrauskleidungsanordnung mit einer flüssigen, harzaufnehmenden, elastischen, rohrförmigen Hauptrohrauskleidung (5) und einer luftdichten polymeren Folie (6), mit der die gesamte Außenfläche der Hauptrohrauskleidung eng anliegend überzogen ist;
(f) Umstülpen der Hauptrohrauskleidung (5) unter Fluiddruck in das Hauptrohr (10);
(g) Aushärten des flüssigen Harzes, das die Hauptrohrauskleidung (5) durchtränkt, um dadurch die Hauptrohrauskleidung auszuhärten, während die Hauptrohrauskleidung aufgeblasen bleibt; und
(h) Anfertigen eines Loches durch jenen Teil der Hauptrohrauskleidung (5), der die Abzweigrohröffnung verschließt.

8. Verfahren nach Anspruch 7, **dadurch gekennzeichnet, daß**, was die Zeit des Schrittes (g) betrifft, die Summe (t₃) der Dicke (t₁) des ebenen Abschnittes des Ringes (1B) und der Dicke (t₂) jenes Teils der Hauptrohrauskleidung (5), der den ebenen Abschnitt des Ringes überdeckt, größer ist als die Dicke (t₄) der anderen Teile der Hauptrohrauskleidung.

## Revendications

1. Assemblage de revêtement d'un tuyau de dérivation (1), comportant: un revêtement tubulaire flexible à absorption de résine liquide du tuyau de dérivation (1A) ; un collier annulaire rigide (1B) agencé au niveau d'une extrémité dudit revêtement tubulaire du tuyau de dérivation ; et un film polymère étanche à l'air (2), recouvrant étroitement l'ensemble de la surface externe du revêtement tubulaire du tuyau de dérivation (1A) ; ledit collier annulaire rigide (1B) comprenant une partie plane et une protubérance généralement cylindrique (1a) s'étendant d'une périphérie interne de la partie plane, dans une direction généralement perpendiculaire à la partie plane et contactant au niveau de son extrémité ladite extrémité du revêtement tubulaire du tuyau de dérivation (1) ; ladite protubérance généralement cylindrique (la) ayant une hauteur (h) comprise entre 0,5 et 50 mm, mesurée d'une surface latérale plus proche de la partie plane; le diamètre extérieur (d₂) de la protubérance généralement cylindrique (la) étant inférieur de 0,1 à 50 mm au diamètre intérieur (D₂) d'un tuyau de dérivation (11) devant être revêtu de l'assemblage de revêtement du tuyau de dérivation ; la distance maximale (d₃) entre deux points quelconques situés sur le bord externe de la partie plane et opposés l'un à l'autre à travers le centre du collier (1B) étant notablement supérieure au diamètre extérieur (D₁) dudit tuyau de dérivation ; la partie plane ayant une épaisseur (t₁) de 1 mm ou plus et une élasticité à la flexion de 30 kg/mm² ou plus ; et **caractérisé en ce que** plusieurs trous de pénétration (3) alignés dans une rangée circulaire sont formés à travers la partie plane du collier (1B).

2. Assemblage de revêtement d'un tuyau de dérivation selon la revendication 1, **caractérisé en ce que** ladite protubérance généralement cylindrique (la) a la forme d'un cylindre solide

3. Assemblage de revêtement d'un tuyau de dérivation selon la revendication 1, **caractérisé en ce que** ladite protubérance généralement cylindrique (la) est composée d'un certain nombre de saillies intermittentes alignées dans une rangée circulaire.

4. Assemblage de revêtement d'un tuyau de dérivation selon la revendication 1, **caractérisé en ce que** ladite protubérance généralement cylindrique (1a) est composée d'un groupe circulaire de saillies intermittentes.

5. Assemblage de revêtement d'un tuyau de dérivation selon l'une quelconque des revendications 1 à 4, **caractérisé en ce que** ledit film polymère (2) s'étend de sorte à recouvrir les régions dans lesquelles la protubérance généralement cylindrique (la) du collier (1B) contacte ladite une extrémité du revêtement tubulaire du tuyau de dérivation (1A), de sorte à établir l'étanchéité dudit revêtement du tuyau (1A) et dudit collier (1B).

6. Assemblage de revêtement d'un tuyau de dérivation selon l'une quelconque des revendications 1 à 4, **caractérisé en ce qu'**un matériau de revêtement est appliqué de sorte qu'une région limite dans laquelle la protubérance généralement cylindrique (la) du collier (1B) contacte ladite une extrémité du revêtement tubulaire du tuyau de dérivation (1A), de sorte à établir l'étanchéité dudit revêtement du tuyau (1A) et dudit collier (1B).

7. Procédé de revêtement d'un tuyau principal (10) et d'un tuyau de dérivation (11) du tuyau principal, comprenant les étapes ci-dessous :
(a) fourniture d'un assemblage de revêtement d'un tuyau de dérivation selon l'une quelconque des revendications 1 à 6 ;
(b) fixation dudit collier (1B) sur la partie de la paroi interne du tuyau principal (10) formant la bordure d'une ouverture du tuyau de dérivation établissant une entrée vers le tuyau de dérivation (11) ;
(c) retournement dudit revêtement du tuyau de dérivation (1A) en présence d'une pression de fluide dans le tuyau de dérivation (11) dudit tuyau principal (10) ;
(d) durcissement de ladite résine liquide imprégnée dans ledit tuyau de revêtement (1A) pour durcir ainsi ledit revêtement du tuyau de dérivation, le revêtement du tuyau de dérivation restant gonflé ;
(e) préparation d'un assemblage de revêtement flexible du tuyau principal comportant un revêtement tubulaire du tuyau principal à absorption d'une résine liquide (5) et un film polymère étanche à l'air (6) recouvrant étroitement l'ensemble de la surface externe dudit revêtement du tuyau principal ;
(f) retournement dudit revêtement du tuyau principal (5) en présence d'une pression de fluide dans le tuyau principal (10) ;
(g) durcissement de ladite résine liquide imprégnée dans ledit revêtement du tuyau principal (5) pour durcir ainsi ledit revêtement du tuyau principal, ledit revêtement du tuyau principal restant gonflé ; et
(h) formation d'un trou à travers la partie du revêtement du tuyau principal (5) fermant ladite ouverture du tuyau de dérivation.

8. Procédé selon la revendication 7, **caractérisé en ce que** lors de ladite étape (g), la somme (t₃) de l'épaisseur (t₁) de la partie plane du collier (1B) et l'épaisseur (t₂) de la partie du revêtement du tuyau principal (5) chevauchant la partie plane du collier est supérieure à l'épaisseur (T₄) des autres parties du revêtement du tuyau principal.
